# EUROPEAN PATENT SPECIFICATION

(11) **EP 1 919 692 B1**
(45) Date of publication and mention of the grant of the patent: **23.10.2013**
(21) Application number: 05850714.6
(22) Date of filing: 28.12.2005
(51) Int. Cl.: B29C 65/08, B29C 65/74, B65B 1/22, B65B 51/30

(54) **ASSEMBLY FOR ULTRASOUND SEALING CONTINUOUS TUBULAR STRIPS**
ANORDNUNG ZUM ULTRASCHALLVERSIEGELN VON RÖHRENFÖRMIGEN ENDLOSSTREIFEN
AGENCEMENT POUR SCELLAGE PAR ULTRASONS DE BANDES TUBULAIRES CONTINUES

(30) Priority: 29.07.2005 IT BO20050511
(43) Date of publication of application: 14.05.2008
(73) Proprietor: AZIONARIA COSTRUZIONI MACCHINE AUTOMATICHE-A.C.M.A.-S.p.A., 40131 Bologna (IT)
(72) Inventor: GHIOTTI, Roberto, I-40050 Calderino Monte San Pietro (IT); POLUZZI, Elena, I-40131 Bologna (IT); BOLDRINI, Fulvio, I-44100 Ferrara (IT)
(74) Representative: Bergadano, Mirko
(86) International application number: PCT/IB2005/003890
(87) International publication number: WO 2007/012917

(56) References cited:
- EP-A- 0 658 336
- WO-A-2005/102844
- US-A1- 2002 189 206
- PATENT ABSTRACTS OF JAPAN vol. 2003, no. 12, 5 December 2003 (2003-12-05) -& JP 2004 330622 A (ZUIKO CORP), 25 November 2004 (2004-11-25)

## Description

### TECHNICAL FIELD

The present invention relates to an assembly for ultrasound sealing continuous tubular strips.

### BACKGROUND ART

As is known, for example, from US-6, 574, 944, on FFS (Form, Fill and Seal) machines, a continuous tubular strip of thermoplastic material, housing an orderly succession of products, is fed along a feed path extending through a rotary sealing assembly located at a sealing station to close the tubular strip along a succession of transverse seal lines, each located along a respective portion of the tubular strip between two adjacent products.

The above known rotary sealing assembly comprises a first and second rotor, which are located on opposite sides of the feed path, have respective pitch surfaces tangent to each other and to the feed path, and rotate in opposite directions about a first and second axis, respectively, parallel to each other and defining a plane through the sealing station and perpendicular to the feed path.

The first rotor has at least one sealing device having an active sealing surface movable along the respective pitch surface; and the second rotor has at least one anvil, an end contrast surface of which is movable along the relative pitch surface and reaches the sealing station in time with the active sealing surface. The anvil is normally connected to the relative rotor by a device for adjusting the radial position of the contrast surface, which has a central slot engaged by a blade, the cutting edge of which engages and cuts the continuous tubular strip at the sealing station.

Once set to a given position, the anvil of known sealing assemblies of the above type is fixed and connected rigidly to the relative rotor.

Machines of the above type employing electrically heated, as opposed to ultrasound, sealing bodies comprise elastic means interposed between the two rotors to allow roughly one millimetre travel of the sealing body from its set position towards the axis of the relative rotor, to reduce vibration and improve grip between the sealing body on one side and the anvil and blade on the other.

Though effective on sealing assemblies with electrically heated active sealing surfaces, the elastic means cannot be used on ultrasound sealing assemblies comprising vibratory sonotrodes, on account of vibration being transmitted, in use, by the sonotrode to the relative anvil, and being retransmitted by the anvil. Consequently, an ultrasound sealing assembly must normally be equipped with fixed, i.e. non--cushioned anvils.

EP0658336A1 discloses an apparatus for transversely sealing multi-ply diaper webs including an ultrasonic horn assembly above the web and an anvil assembly below the web; the two assemblies are rotated with points of orbit intersection at two spaced apart points on the web and one of the assemblies is resiliently mounted so as to yield when the two assemblies come in contact during sealing.

### DISCLOSURE OF INVENTION

It is an object of the present invention to provide a rotary ultrasound sealing assembly designed to eliminate the aforementioned drawbacks.

According to the present invention, there is provided a rotary sealing assembly as claimed in the accompanying Claims.

### BRIEF DESCRIPTION OF THE DRAWINGS

A number of non-limiting embodiments of the present invention will be described by way of example with reference to the accompanying drawings, in which:
Figure 1 shows a schematic axial section, with parts removed for clarity, of a first preferred embodiment of the rotary ultrasound sealing assembly according to the present invention;
Figure 2 shows a section along line II--II in Figure 1;
Figure 3 shows a section along line III-III in Figure 1;
Figure 4 shows a section along line IV-IV in Figure 1;
Figure 5 shows a cross section of a first variation of the rotary ultrasound sealing assembly in Figure 1;
Figure 6 shows a cross section of a second variation of the rotary ultrasound sealing assembly in Figure 1;
Figure 7 shows a cross section of a third variation of the rotary ultrasound sealing assembly in Figure 1;
Figure 8 shows the same section as in Figure 3, but of a second embodiment.

### BEST MODE FOR CARRYING OUT THE INVENTION

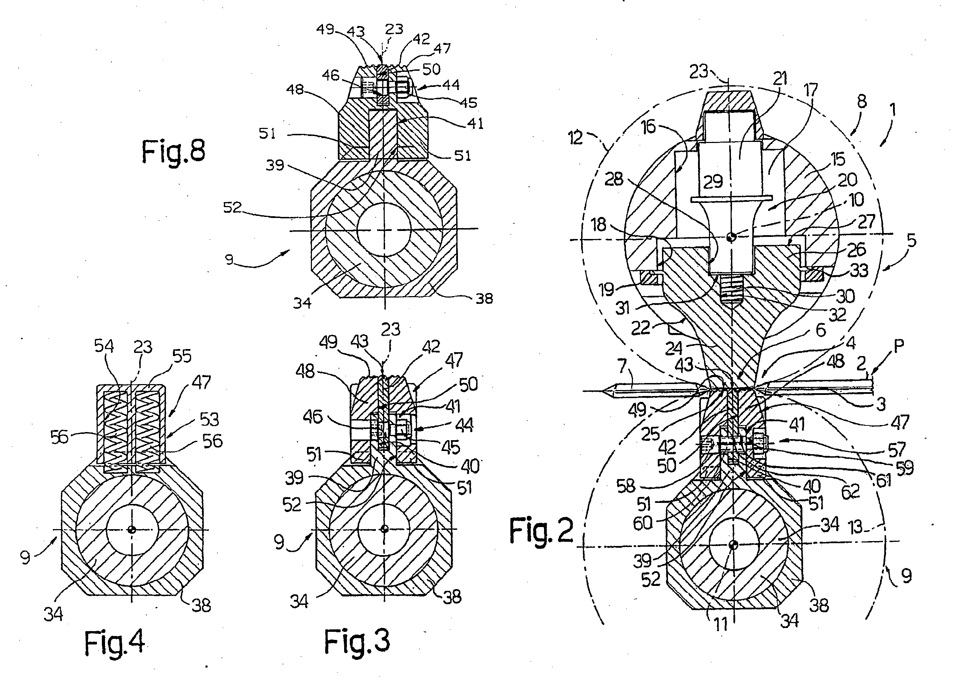

Number 1 in Figure 2 indicates as a whole an FFS machine, wherein a continuous tubular strip 2, housing an orderly succession of products 3, is fed in known manner (not shown) along a feed path P extending through a sealing station 4, where machine 1 comprises a rotary ultrasound sealing assembly 5 for closing tubular strip 2 along sealing areas 6 crosswise to the axis of tubular strip 2 and located at respective portions of tubular strip 2 between respective pairs of adjacent products 3, and for cutting tubular strip 2 along sealing areas 6 to form a succession of sealed wrappings 7 containing respective products 3.

Rotary assembly 5 comprises two rotors 8 and 9, which are located on opposite sides of feed path P, rotate in opposite directions about respective parallel axes 10 and 11 defining a plane perpendicular to feed path P at sealing station 4, and have respective cylindrical pitch surfaces 12 and 13 substantially tangent to each other and to feed path P at the sealing station.

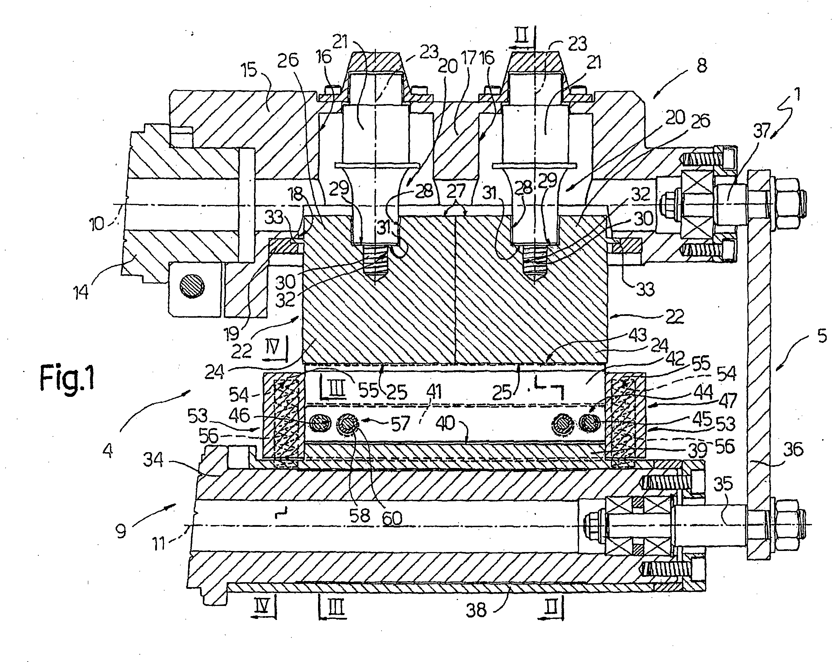

The rotary sealing assembly 5 shown in Figure 1 is particularly suitable for relatively wide tubular strips 2, and rotor 8 comprises a drive shaft 14 coaxial with axis 10 and fitted on its free end with a sleeve 15, through which are formed two diametrical through openings 16 separated by a transverse partition 17, which terminates short of axis 10 so that openings 16 communicate with a single substantially rectangular opening 18, an outer edge of which, opposite openings 16, is defined by a ring 19. Each opening 16 is engaged by a respective ultrasound sealing device 20, which projects radially outwards from sleeve 15 through opening 18 and ring 19, and is locked to sleeve 15 by ring 19.

Each sealing device 20 comprises an activating device 21 - which may be a converter, a booster, or a pack of ceramic piezoelectric plates - and a sonotrode 22 arranged in series along a respective axis 23 which is radial with respect to sleeve 15. Sonotrode 22 comprises a tapering horn 24 having a free end surface defining an active surface 25 of relative sealing device 20; and a counterweight 26, which is coaxial with horn 24 along respective axis 23, and has, along a respective end surface 27 facing respective activating device 21, a cavity 28 coaxial with axis 10 and bounded by a bottom surface 29. Activating device 21 is connected to sonotrode 22 by a threaded appendix 30, which projects, coaxially with axis 10, from an end surface 31 of activating device 21, and engages a threaded hole 32 formed through bottom surface 29; .and activating device 21 is partly inserted inside cavity 28, so that free surface 31 contacts bottom surface 29.

Sealing device 20 is connected to ring 19 by a flange 33 integral with sonotrode 22 and extending outwards from sonotrode 22, close to the relative nodal surface (not shown).

As shown in Figure 1, rotor 9 of rotary sealing assembly 5 comprises a tubular drive shaft 34 coaxial with axis 11, and inside a free end of which a pin 35 is mounted for rotation and connected, by a spacer plate 36, to a similar pin 37 mounted for rotation inside the free end of sleeve 15, to keep sleeve 15 and drive shaft 34 parallel to each other.

Rotor 9 also comprises a sleeve 38 fitted to drive shaft 34, facing sleeve 15, and having an axial rib 39, in turn having a longitudinal slot 40, which defines, on rib 39, a longitudinal fork 41 engaged by an inner portion of a blade 42, which extends longitudinally along axial rib 39 by a length equal to at least twice the longitudinal dimension of a sonotrode 22, and has an outer portion projecting radially from fork 41 and having a cutting edge 43 parallel to axis 11. As shown in Figures 1 and 3, the radial position of blade 42 is fixed rigidly to rotor 9 along longitudinal fork 41, and is adjusted by a known adjusting and fastening device 44 comprising two bolts 45 extending through respective holes formed through fork 41, and respective longitudinal slots 46 formed through blade 42.

Rotor 9 also comprises one anvil 47 cooperating with both sonotrodes 22, and of a length, measured parallel to axes 10 and 11, at least equal to the total length of both sonotrodes 22. Anvil 47 is substantially cup-shaped with its concavity facing axis 11, and comprises a top wall 48 parallel to axis 11, bounded externally by a grooved contrast surface 49, and having a longitudinal slot 50 engaged in radially sliding manner by blade 42; and two lateral walls 51 defining between them a groove 52 communicating with slot 50 and engaged in radially sliding manner by axial rib 39.

As shown in Figures 1 and 4, anvil 47 has two longitudinal end portions 53, each of which projects from the respective longitudinal end of blade 42, and defines a relative chamber 54 closed outwardly by an end wall 55, open towards axis 11, and housing elastic means 56 defined by two respective metal helical springs 56. Other elastic means may be used, of other than helical shape and made, for example, of music wire. Springs 56 are located side by side in respective substantially radial positions, and are compressed between end wall 55 and the outer surface of sleeve 38.

As shown in Figures 1 and 2, the radial position of anvil 47 is adjusted by a known eccentric adjusting and fastening device 57 comprising two bolts 58, each of which extends through respective holes 59 formed through lateral walls 51, and comprises a central eccentric portion 60 which engages, radially loosely, two holes 61 formed through fork 41, and a hole 62 formed through blade 42.

Operation of rotary sealing assembly 5 is easily deducible from the foregoing description, with no further explanation required.

It should be pointed out, however, that, outside sealing station 4, by virtue of the adjustment by adjusting and fastening device 44 and the thrust exerted by springs 56, the slack between eccentric portion 60 of bolts 58 and holes 61 in longitudinal fork 41 is located entirely on the opposite side of eccentric portion 60 to that facing axis 11; whereas, at sealing station 4, the slack between eccentric portion 60 of bolts 58 and holes 61 in longitudinal fork 41 is shifted in opposition to springs 56 and by virtue of contrast surface 49 contacting active surfaces 25 of sonotrodes 22, with tubular strip 2 in between - to the side of eccentric portion 60 facing axis 11, thus "elastically" coupling sonotrodes 22 and anvil 47.

In a second embodiment shown in Figure 8, blade 42 is fixed elastically, as opposed to rigidly, to rotor 9, by being fixed rigidly to anvil 47, which has elastic means 56 interposed between anvil 47 and relative rotor 9. In this case too, blade 42 is adjusted by means of a known adjusting and fastening device 44 comprising two bolts 45 extending through respective holes formed through anvil 47, and respective longitudinal slots 46 formed through blade 42.

In connection with the above, it should be pointed out that, as sonotrodes 22 and anvil 47 travel through sealing station 4, the heat transmitted by sonotrodes 22 to anvil 47 in no way damages, and in no way affects, other than marginally, the elastic response of, springs 56.

Also, since the thickness of the material interposed between sonotrodes 22 and anvil 47 is reduced by plasticization of the material, thus resulting in radial movement of anvil 47 towards sonotrodes 22, the pressure exchanged between sonotrodes 22 and anvil 47 at sealing station 4 by virtue of springs 56 is also reduced gradually and automatically as plasticization proceeds, thus preventing excessive compression and weakening of the end portions of sealed wrappings 7.

In a variation not shown, and more suitable for narrower tubular strips, sleeve 15 of rotor 8 supports a single sealing device 20, the sonotrode 22 of which has an active surface 25 of a length, measured parallel to axes 10 and 11, substantially equal to the length of contrast surface 49 of relative anvil 47, and slightly greater than the width of tubular strip 2.

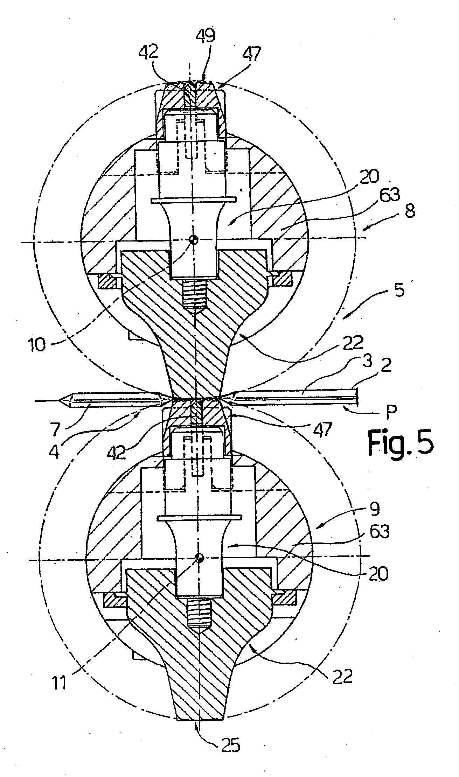

Figures 5 to 7 show, purely by way of non-limiting examples, various structural configurations of rotors 8 and 9, which, in the Figure 5 configuration, are identical, and each comprise a respective sleeve 63, from which the sonotrode 22 of a relative sealing device 20, and a respective anvil 47, with a relative blade 42, project radially outwards in diametrically opposite positions.

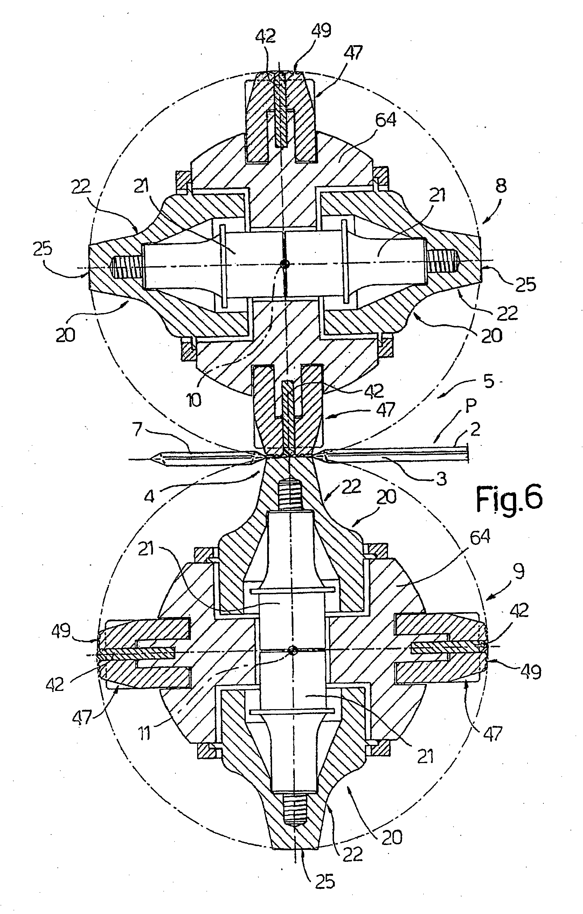

In the Figure 6 configuration too, rotors 8 and 9 are identical, and each comprise a respective sleeve 64, from which the two sonotrodes 22 of two sealing devices 20 project radially outwards in diametrically opposite positions, and two anvils 47, with respective blades 42, project radially outwards in diametrically opposite positions and at 90° to the two sonotrodes 22.

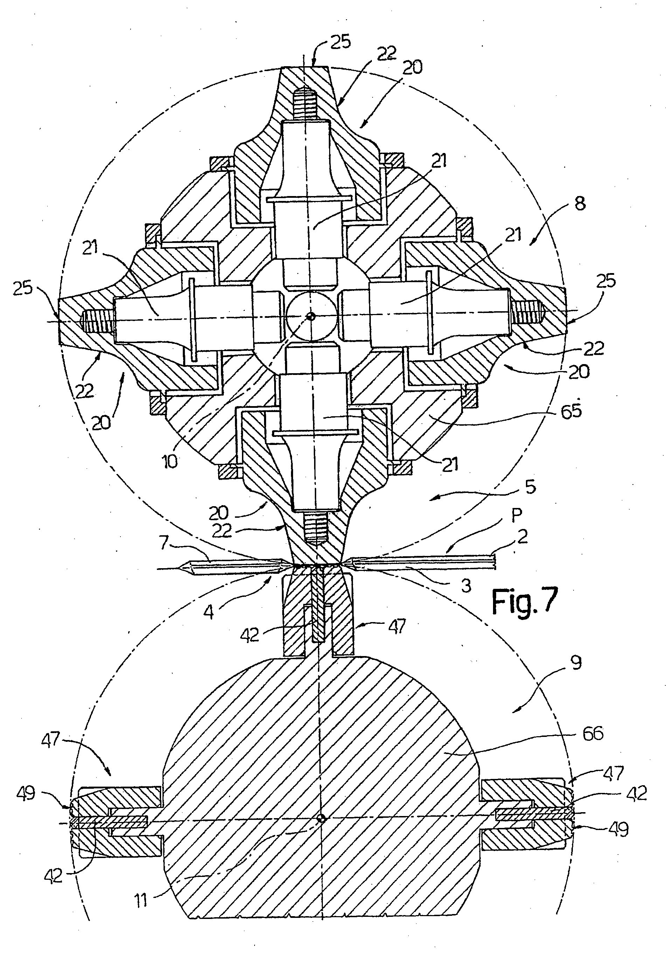

In the Figure 7 configuration, rotors 8 and 9 differ. More specifically, rotor 8 comprises a sleeve 65, from which the sonotrodes 22 of four sealing devices 20 project radially outwards and are equally spaced about axis 10; while rotor 9 comprises a drive shaft 66, from which four anvils 47, with respective blades 42, project outwards with the same spacing as sonotrodes 22.

## Claims

1. A rotary ultrasound sealing assembly, which is located at a sealing station (4) to ultrasound seal a continuous tubular strip (2) housing an orderly succession of products (3) and travelling along a feed path (P) extending through the sealing station (4); the rotary sealing assembly (5) comprising:
two rotors (8, 9), which are located on opposite sides of the feed path (P), rotate in opposite directions about respective axes (10, 11), and have respective pitch surfaces (12, 13) tangent to each other and to the feed path (P);
at least one ultrasound sealing device (20) fitted to at least one of the two rotors (8, 9);
a corresponding anvil (47) which cooperates, at the sealing station (4), with the sealing device (20) and is fitted to the other of the two rotors (8, 9); and
elastic means (56) interposed between the anvil (47) and the relative rotor (8; 9) to allow an elastic movement between the anvil (47) and the relative rotor (8; 9) along a radial direction perpendicular to the feed path (P);
the rotary sealing assembly is **characterized in that**:
a. the elastic means (56) are made of metal;
b. the anvil (47) comprises hollow portions (53) open towards the relative rotor (8; 9);
c. each hollow portion (53) has an end wall (55) closing it outwardly; and
d. each elastic means (56) is housed inside a relative hollow portion (53), and is compressed between the relative rotor (8; 9) and the relative end wall (55).

2. A rotary sealing assembly as claimed in Claim 1, wherein the elastic means comprise metal helical springs (56).

3. A rotary sealing assembly as claimed in Claim 2, wherein said springs (56) extend substantially radially with respect to the relative rotor (8; 9).

4. A rotary sealing assembly as claimed in one of the foregoing Claims, wherein the hollow portions (53) are two in number, and define respective longitudinal end portions of the anvil (47).

5. A rotary sealing assembly as claimed in one of the foregoing Claims, and comprising two sealing devices (20) having respective aligned active surfaces (25); the anvil (47) having a contrast surface (49) extending longitudinally to cooperate with both said active surfaces (25) at the sealing station (4).

6. A rotary sealing assembly as claimed in one of the foregoing Claims, wherein each said rotor (8;9) comprises a given number of sealing devices (20), and an equal number of anvils (47); each sealing device (20) having a respective active surface (25); each anvil (47) having a respective contrast surface (49); and said active (25) and contrast (49) surfaces defining respective alternating portions equally spaced along the pitch surface (12; 13) of the relative rotor (8; 9).

7. A rotary sealing assembly as claimed in Claim 6, wherein, along the pitch surface (12; 13) of the relative rotor (8; 9), each active surface (25) is located diametrically opposite another active surface (25).

8. A rotary sealing assembly as claimed in Claim 6, wherein, along the pitch surface (12; 13) of the relative rotor (8; 9), each active surface (25) is located diametrically opposite a contrast surface (49).

9. A rotary sealing assembly as claimed in one of Claims 1 to 5, and comprising a number of sealing devices (20) and a number of anvils (47); the sealing devices (20) all being supported by one (8) of the rotors (8, 9), and the anvils (47) all being supported by the other (9) of the rotors (8, 9).

10. A rotary sealing assembly as claimed in Claim 1, wherein at least one of the two rotors (8, 9) is fitted rigidly with a blade (42).

11. A rotary sealing assembly as claimed in Claim 1, wherein at least one of the two rotors (8, 9) is fitted elastically with a blade (42) fixed rigidly to the anvil (47); the elastic means (56) being interposed between the anvil (47) and the relative rotor (8; 9).

12. An FFS machine comprising a rotary ultrasound sealing assembly (5) as claimed in any one of the foregoing Claims.

## Patentansprüche

1. Rotierende Ultraschallversiegelungsvorrichtung (5), welche an einer Versiegelungsstation (4) angeordnet ist, um eine fortlaufende schlauchartige Dichtung (2), die eine planmäßige Aufeinanderfolge von Produkten (3) beinhaltet und entlang eines sich durch die Versiegelungsstation (4) erstreckenden Vorschubweges (P) geführt wird, durch Ultraschall zu versiegeln, wobei die rotierende Ultraschallversiegelungsvorrichtung (5) aufweist:
zwei Rotoren (8, 9), welche auf gegenüberliegenden Seiten des Vorschubweges (P) angeordnet sind, in entgegengesetzte Richtungen um entsprechende Achsen (10, 11) rotieren, und entsprechende, sich gegenseitig und den Vorschubweg (P) berührende Wälzflächen (12, 13) aufweisen;
zumindest eine, an zumindest einen der beiden Rotoren (8, 9) angebrachte Ultraschallversiegelungseinheit (20);
einen entsprechenden Amboss (47), welcher in der Versiegelungsstation (4) mit der Versiegelungseinheit (20) zusammenwirkt und an dem anderen der beiden Rotoren (8, 9) angebracht ist; und
elastische, zwischen dem Amboss (47) und dem entsprechenden Rotor (8, 9) angeordnete Mittel (56), um eine elastische Bewegung zwischen dem Amboss (47) und dem entsprechenden Rotor (8; 9) entlang einer radialen Richtung rechtwinklig zum Vorschubweg (P) zu gewährleisten;
wobei die rotierende Ultraschallversiegelungsvorrichtung **dadurch gekennzeichnet ist, dass**:
a. die elastischen Mittel (56) aus Metall hergestellt werden;
b. der Amboss (47) zum entsprechenden Rotor (8, 9) hin offene, ausgesparte Teilabschnitte (53) aufweist;
c. jeder ausgesparte Teilabschnitt (53) eine, diesen nach außen abschließende Endwand (55) hat; und
d. jedes elastische Mittel (56) innerhalb eines jeweiligen ausgesparten Teilabschnitts (53) untergebracht und zwischen dem jeweiligen Rotor (8, 9) und der entsprechenden Endwand (55) zusammengedrückt ist.

2. Rotierende Ultraschallversiegelungsvorrichtung (5) nach Anspruch 1, wobei die elastischen Mittel metallische Schraubenfedern (56) aufweisen.

3. Rotierende Ultraschallversiegelungsvorrichtung (5) nach Anspruch 2, wobei die Federn (56) sich im Wesentlichen radial im Bezug auf den jeweiligen Rotor (8, 9) erstrecken.

4. Rotierende Ultraschallversiegelungsvorrichtung (5) nach einem der vorausgegangenen Ansprüche, wobei die ausgesparten Teilabschnitte (53) zwei an der Anzahl sind und die jeweiligen longitudinalen Endabschnitte des Ambosses (47) festlegen.

5. Rotierende Ultraschallversiegelungsvorrichtung (5) nach einem der vorausgegangenen Ansprüche, wobei diese zwei Versiegelungseinheiten (20) aufweist, die jeweilig aneinandergereihte aktive Oberflächen (25) aufweisen; der Amboss (47), der eine gegenüberliegende Oberfläche (49) aufweist, die sich longitudinal erstreckt, um mit den aktiven Oberflächen (25) in der Versiegelungseinheit (4) zusammenzuwirken.

6. Rotierende Ultraschallversiegelungsvorrichtung (5) nach einem der vorausgegangenen Ansprüche, wobei jeder Rotor (8, 9) eine bestimmte Anzahl an Versiegelungseinheiten (20) und eine gleiche Anzahl an Ambossen (47) aufweist; jede Versiegelungseinheit (20) eine jeweilige aktive Oberfläche (25) aufweist; jeder Amboss (47) eine jeweilige gegenüberliegende Oberfläche (49) aufweist; und aktive (25) und gegenüberliegende (49) Oberflächen jeweilige sich abwechselnde Teilabschnitte festlegen, welche entlang der Wälzfläche (12, 13) des jeweiligen Rotors (8, 9) in gleichen Abständen angeordnet sind.

7. Rotierende Ultraschallversiegelungsvorrichtung (5) nach Anspruch 6, wobei entlang der Wälzfläche (12, 13) des jeweiligen Rotors (8, 9) jede aktive Oberfläche (25) diametral gegenüber einer anderen aktiven Oberfläche (25) angeordnet ist.

8. Rotierende Ultraschallversiegelungsvorrichtung (5) nach Anspruch 6, wobei entlang der Wälzfläche (12, 13) des jeweiligen Rotors (8, 9) jede aktive Oberfläche (25) diametral gegenüber einer gegenüberliegenden Oberfläche (49) angeordnet ist.

9. Rotierende Ultraschallversiegelungsvorrichtung (5) nach einem der Ansprüche 1 bis 5, wobei diese eine Anzahl an Versiegelungseinheiten (20) und eine Anzahl an Ambossen (47) aufweist; alle Versiegelungseinheiten (20) von einem (8) der Rotoren (8, 9) gestützt werden; und alle Ambosse vom anderen (9) der Rotoren (8, 9) gestützt werden.

10. Rotierende Ultraschallversiegelungsvorrichtung (5) nach Anspruch 1, wobei zumindest einer der zwei Rotoren (8, 9) steif mit einer Schneide (42) verbunden ist.

11. Rotierende Ultraschallversiegelungsvorrichtung (5) nach Anspruch 1, wobei zumindest einer der zwei Rotoren (8, 9) elastisch mit einer steif mit dem Amboss (47) verbundenen Schneide (42) verbunden ist und die elastischen Mittel (56) zwischen dem Amboss (47) und dem jeweiligen Rotor (8, 9) eingefügt sind.

12. FFS Maschine mit einer rotierenden Ultraschallversiegelungsvorrichtung (5) nach einem der vorangegangenen Ansprüche.

## Revendications

1. Ensemble rotatif de scellage par ultrasons, situé dans une station de scellage (4) pour sceller par ultrasons une bande tubulaire continue (2) recevant une succession ordonnée de produits (3) et se déplaçant le long d'une trajectoire d'alimentation (P) s'étendant à travers la station de scellage (4); l'ensemble rotatif de scellage (5) comprenant :
deux rotors (8, 9) situés sur des côtés opposés de la trajectoire d'alimentation (P), tournant dans des directions opposées autour d'axes respectifs (10, 11) et présentant des surfaces de pas (12, 13) tangentes l'une à l'autre et à la trajectoire d'alimentation (P);
au moins un dispositif de scellage par ultrasons (20) fixé à au moins l'un des deux rotors (8, 9);
une enclume (47) correspondante qui coopère, au niveau de la station de scellage (4), avec le dispositif de scellage (20) et est fixée à l'autre des deux rotors (8, 9); et
des moyens élastiques (56) interposés entre l'enclume (47) et le rotor (8; 9) respectif pour permettre un mouvement élastique entre l'enclume (47) et le rotor (8; 9) respectif le long d'une direction radiale perpendiculaire à la trajectoire d'alimentation (P);
l'ensemble rotatif de scellage étant **caractérisé en ce que**:
a. les moyens élastiques (56) sont en métal;
b. l'enclume (47) comprend des parties creuses (53) ouvertes vers le rotor (8; 9) respectif;
c. chaque partie creuse (53) présente une paroi d'extrémité (55) fermant celle-ci vers l'extérieur; et
d. chaque moyen élastique (56) est logé à l'intérieur d'une partie creuse (53) respective et est comprimé entre le rotor (8; 9) respectif et la paroi d'extrémité (55) respective.

2. Ensemble rotatif de scellage selon la revendication 1, dans lequel les moyens élastiques comprennent des ressorts hélicoïdaux métalliques (56).

3. Ensemble rotatif de scellage selon la revendication 2, dans lequel lesdits ressorts (56) s'étendent sensiblement radialement par rapport au rotor (8; 9) respectif.

4. Ensemble rotatif de scellage selon l'une des revendications précédentes, dans lequel les parties creuses (53) sont au nombre de deux et définissent des parties d'extrémité longitudinales respectives de l'enclume (47).

5. Ensemble rotatif de scellage selon l'une des revendications précédentes, comprenant deux dispositifs de scellage (20) présentant des surfaces actives (25) alignées respectives; l'enclume (47) présentant une surface de contraste (49) s'étendant longitudinalement pour coopérer avec les deux dites surfaces actives (25) dans la station de scellage (4).

6. Ensemble rotatif de scellage selon l'une des revendications précédentes, dans lequel chaque dit rotor (8; 9) comprend un nombre défini de dispositifs de scellage (20) et nombre égal d'enclumes (47); chaque dispositif de scellage (20) ayant une surface active (25) respective ; chaque enclume (47) ayant une surface de contraste (49) respective; et lesdites surfaces active (25) et de contraste (49) définissant des parties alternées respectives, régulièrement espacées le long de la surface de pas (12; 13) du rotor (8; 9) respectif.

7. Ensemble rotatif de scellage selon la revendication 6, dans lequel, le long de la surface de pas (12; 13) du rotor respectif (8; 9), chaque surface active (25) est située de manière diamétralement opposée à une autre surface active (25).

8. Ensemble rotatif de scellage selon la revendication 6, dans lequel, le long de la surface de pas (12; 13) du rotor respectif (8; 9), chaque surface active (25) est située de manière diamétralement opposée à une autre surface de contraste (49).

9. Ensemble rotatif de scellage selon l'une des revendications 1 à 5, comprenant un certain nombre de dispositifs de scellage (20) et un certain nombre d'enclumes (47); les dispositifs de scellage (20) étant tous supportés par l'un (8) des rotors (8; 9), et les enclumes (47) étant toutes supportées par l'autre (9) des rotors (8, 9).

10. Ensemble rotatif de scellage selon la revendication 1, dans lequel au moins l'un des deux rotors (8, 9) est équipé d'une lame (42) montée de manière rigide.

11. Ensemble rotatif de scellage selon la revendication 1, dans lequel au moins l'un des deux rotors (8, 9) est équipé d'une lame (42) montée de manière élastique sur celui-ci et fixée de manière rigide à l'enclume (47); les moyens élastiques (56) étant interposés entre l'enclume (47) et le rotor (8; 9) respectif.

12. Machine FFS comprenant un ensemble rotatif de scellage par ultrasons (5) selon l'une quelconque des revendications précédentes.
